# FASCICULE DE BREVET EUROPEEN

(11) **EP 0 839 570 B1**
(45) Date de publication et mention de la délivrance du brevet: **05.01.2000**
(21) Numéro de dépôt: 97203255.1
(22) Date de dépôt: 17.10.1997
(51) Int. Cl.: B01D 61/44, C01D 1/38, C25B 1/16

(54) **Procédé de fabrication d'une solution aqueuse d'hydroxyde de sodium**
Verfahren zur Herstellung einer wässrigen Natriumhydroxidlösung
Process for manufacturing an aqueous solution of sodium hydroxide

(30) Priorité: 31.10.1996 IT MI962273
(43) Date de publication de la demande: 06.05.1998
(73) Titulaire: SOLVAY (Société Anonyme), 1050 Bruxelles (BE)
(72) Inventeur: Posar, Francesco, 57013 Rosignano-Solvay/Li (IT)
(74) Mandataire: Anthoine, Paul

(56) Documents cités:
- EP-A- 0 124 007
- EP-A- 0 560 422
- EP-A- 0 577 207
- US-A- 4 238 305
- US-A- 4 592 817

## Description

L'invention concerne la fabrication d'hydroxyde de sodium par électrodialyse de carbonate de sodium.

L'électrodialyse est une technique bien connue pour fabriquer des solutions aqueuses d'hydroxyde de sodium. Ainsi, dans le brevet Etats-Unis 4 238 305, on décrit un procédé dans lequel on met en oeuvre une cellule d'électrodialyse du type à deux compartiments, délimités entre une membrane cationique et une membrane bipolaire et on électrodialyse une solution aqueuse de carbonate de sodium dans le compartiment de la cellule, qui est délimité entre la membrane cationique et la face cationique de la membrane bipolaire. L'électrodialyse de la solution aqueuse de carbonate de sodium conduit à la formation d'une solution aqueuse d'hydroxyde de sodium dans le compartiment basique de la cellule, qui est adjacent à la face anionique de la membrane bipolaire. Dans ce procédé connu, les conditions de l'électrodialyse sont choisies en sorte de réaliser un pH acide dans le compartiment de la cellule, qui est alimenté avec la solution de carbonate de sodium. Il s'ensuit que du dioxyde de carbone est généré dans ce compartiment.

Dans le procédé connu décrit ci-dessus, la formation de dioxyde de carbone gazeux dans la cellule d'électrodialyse constitue un inconvénient. En effet, la membrane bipolaire utilisée dans ce procédé connu est généralement formée par juxtaposition d'une membrane anionique et d'une membrane cationique, de sorte que la libération de dioxyde de carbone à son contact provoque inévitablement une dislocation de la membrane bipolaire par séparation de ses composantes anionique et cationique.

Pour remédier à cet inconvénient, on propose, dans le brevet européen EP-B-560 422, de réaliser un pH alcalin dans le compartiment que l'on alimente avec la solution de carbonate de sodium, pour empêcher qu'il s'y forme du dioxyde de carbone. Bien que ce procédé connu réduise de manière notable les sollicitations de la membrane bipolaire, en pratique il s'est néanmoins révélé difficile d'éviter totalement que du dioxyde de carbone se forme de manière locale, notamment dans les pores de la membrane bipolaire.

L'invention vise à fournir un procédé amélioré pour la fabrication d'hydroxyde de sodium par électrodialyse de carbonate de sodium dans une cellule équipée d'une membrane bipolaire, ce procédé se particularisant en ce qu'il évite la formation de dioxyde de carbone gazeux au contact de la membrane bipolaire.

L'invention concerne dès lors un procédé de fabrication d'hydroxyde de sodium par électrodialyse de carbonate de sodium, qui se caractérise en ce qu'on met en oeuvre une cellule d'électrodialyse à trois compartiments, on introduit une solution aqueuse de carbonate de sodium dans un compartiment de la cellule, qui est délimité entre deux membranes cationiques, on introduit un acide dans un compartiment qui est délimité entre une des membranes cationiques et une face cationique d'une membrane bipolaire et on extrait une solution aqueuse d'hydroxyde de sodium d'un compartiment qui est adjacent à une face anionique de la membrane bipolaire.

La cellule d'électrodialyse utilisée dans le procédé selon l'invention est du type à trois compartiments, délimités entre deux membranes cationiques et une membrane bipolaire. La cellule d'électrodialyse est disposée entre une anode et une cathode, qui sont raccordées respectivement à la borne positive et à la borne négative d'une source de courant continu. La disposition de l'anode et de la cathode est telle que la face anionique de la membrane bipolaire soit dirigée vers l'anode, tandis que la face cationique de la membrane bipolaire soit dirigée vers la cathode. En pratique, on associe plusieurs (au moins deux, mais généralement plusieurs dizaines) de cellules d'électrodialyse en série entre l'anode et la cathode, de manière à constituer un électrodialyseur industriel.

On entend désigner par membrane cationique, une feuille mince, non poreuse aux électrolytes aqueux et sélectivement perméable aux cations et imperméable aux anions.

La membrane bipolaire utilisée dans le procédé selon l'invention est une membrane qui présente, sur une face, les propriétés d'une membrane cationique et, sur l'autre face, les propriétés d'une membrane anionique (une membrane anionique étant, par définition, une feuille mince, non poreuse aux électrolytes aqueux et sélectivement perméable aux anions et imperméable aux cations). Dans le procédé selon l'invention, on utilise de préférence une membrane bipolaire formée par la juxtaposition d'une membrane cationique et d'une membrane anionique, par exemple du type de celle décrite dans la demande internationale WO 96/01286 [SOLVAY (Société Anonyme)].

Selon l'invention, on introduit une solution aqueuse de carbonate de sodium dans le compartiment de la cellule d'électrodialyse, qui est délimité entre les deux membranes cationiques et on introduit un acide dans le compartiment de la cellule, qui est délimité entre une des deux membranes cationiques et la face cationique de la membrane bipolaire.

La solution aqueuse de carbonate de sodium peut être une solution diluée ou une solution concentrée. On préfère utiliser une solution concentrée, de préférence une solution sensiblement saturée en carbonate de sodium. La solution de carbonate de sodium peut éventuellement comprendre du bicarbonate de sodium dissous.

L'acide doit être un électrolyte. Il convient en outre de sélectionner un acide qui, dans les conditions normales de l'électrodialyse de carbonate de sodium, ne génère pas un gaz. Selon l'invention, l'acide est avantageusement sélectionné parmi les acides minéraux. L'acide chlorhydrique convient bien. L'acide carbonique ne convient pas dans le cadre de l'invention.

L'électrodialyse provoque, de manière connue en soi, une dissociation de l'eau dans la membrane bipolaire et une décomposition du carbonate de sodium.

Dans le procédé selon l'invention, le compartiment contenant la face anionique de la membrane bipolaire peut éventuellement être alimenté avec de l'eau ou avec une solution diluée d'hydroxyde de sodium, par exemple une solution contenant de 0,5 à 5 (de préférence de 1 à 2) moles d'hydroxyde de sodium par litre.

Dans le procédé selon l'invention, l'acide ne participe pas à la réaction d'électrodialyse. Il constitue une barrière qui empêche que du dioxyde de carbone qui viendrait à se former dans la solution de carbonate de sodium atteigne la membrane bipolaire. L'acide peut être un film immobile dans le compartiment. On préfère toutefois faire circuler l'acide de manière continue dans le compartiment, par exemple en boucle entre la cellule et un réservoir d'acide.

Dans le procédé selon l'invention, le pH dans le compartiment alimenté par la solution aqueuse de carbonate de sodium peut être acide, alcalin ou neutre. On préfère réaliser dans ce compartiment un pH alcalin, par exemple au moins égal à 7,5, les valeurs de 7,5 à 12 convenant bien, celles situées entre 9 et 11 étant spécialement avantageuses. D'une manière générale, les conditions optimum de pH dans ce compartiment de la cellule d'électrodialyse peuvent être déterminées aisément par la théorie électrochimique ou par des essais de routine au laboratoire et comprennent notamment un choix approprié de la concentration de la solution de carbonate de sodium et de son débit.

Le pH dans le compartiment acide est de préférence inférieur à la valeur du pH dans le compartiment de la solution de carbonate de sodium. Le pH dans le compartiment acide est avantageusement inférieur à 6, de préférence à 5, les valeurs de pH de 0 à 2 convenant bien, celles situées entre 0 et 0,5 étant spécialement recommandées. La réalisation de la valeur optimum de pH dans le compartiment alimenté avec l'acide peut être aisément obtenue par une sélection appropriée de l'acide et de sa concentration. Les solutions aqueuses d'acide chlorhydrique conviennent bien, les solutions molaires étant spécialement avantageuses.

Dans une forme de réalisation particulière du procédé selon l'invention, on sélectionne l'acide parmi les oxacides hydrosolubles. Par définition, oxacide est le nom générique des acides inorganiques renfermant de l'oxygène (DUVAL, Dictionnaire de la chimie et de ses applications, 3e édition, 1978, Techniques et Documentation, Paris, page 783). Dans cette forme de réalisation du procédé selon l'invention, l'oxacide est de préférence sélectionné parmi ceux dont l'anion présente un diamètre ionique supérieur à 1,8 Å qui est le diamètre ionique de l'anion chlorure. La sélection d'un hydracide à gros anion réduit le risque d'une migration dudit anion à travers la membrane bipolaire, vers la solution d'hydroxyde de sodium. Les acides sulfurique et nitrique (dont l'anion présente un diamètre supérieur à 2,0 Å) sont spécialement avantageux, l'acide sulfurique étant préféré.

Dans une autre forme de réalisation du procédé selon l'invention, la solution de carbonate de sodium est obtenue par dissolution de sesquicarbonate de sodium dans de l'eau. Dans cette forme de réalisation du procédé selon l'invention, la source de sesquicarbonate est avantageusement du trona, par exemple du trona extrait d'un gisement de l'état du Wyoming aux Etats-Unis.

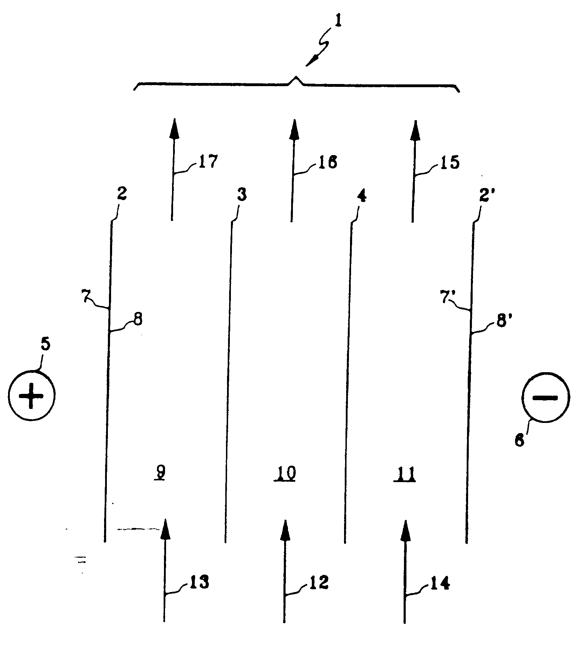

Des particularités et détails de l'invention vont ressortir de la description suivante de la figure unique du dessin annexé, qui représente schématiquement une cellule d'électrodialyse pour la mise en oeuvre du procédé selon l'invention.

La cellule représentée à la figure, désignée dans son ensemble par la notation de référence 1, comprend une membrane bipolaire 2 et deux membranes cationiques 3 et 4 entre une anode 5 et une cathode 6. La membrane bipolaire 2 comprend une face anionique 7 et une face cationique 8. Elle est positionnée dans la cellule de manière à avoir sa face cationique 8 orientée vers la cathode 6. Les membranes cationiques 3 et 4 sont disposées entre la membrane bipolaire 2 et la cathode 6. La cellule comprend ainsi trois compartiments d'électrodialyse 9, 10 et 11 (le compartiment 11 étant délimité par la face anionique 7' de la membrane bipolaire 2' d'une cellule voisine).

Pendant l'exploitation de la cellule 1, l'anode 5 est raccordée à la borne positive d'une source de courant continu et la cathode 6 est raccordée à la borne négative de ladite source de courant. On introduit une solution aqueuse de carbonate de sodium 12 dans le compartiment 10, une solution aqueuse molaire d'acide chlorhydrique 13 dans le compartiment 9 et de l'eau ou une solution diluée d'hydroxyde de sodium 14 dans le compartiment 11. Sous l'effet de la tension entre les électrodes 5 et 6, de l'eau est dissociée dans les membranes bipolaires 2 et 2', de sorte que des protons passent dans le compartiment acide 9 et des ions hydroxyle passent dans le compartiment 11. Simultanément, du carbonate de sodium est décomposé dans le compartiment 10 et des cations Na⁺ passent à travers la membrane cationique 4, dans le compartiment 11. On extrait une solution aqueuse d'hydroxyde de sodium 15 du compartiment 11 de la cellule et une solution aqueuse de carbonate et de bicarbonate de sodium 16 du compartiment 10. On extrait par ailleurs une solution 17 d'acide chlorhydrique du compartiment acide 9. La composition de la solution acide 17 est sensiblement identique à celle de la solution 13. On la recycle dans la solution 13, qui tourne ainsi en circuit fermé. Il peut arriver que du dioxyde de carbone (provenant de la décomposition du carbonate de sodium) s'échappe du compartiment 10. Le compartiment 9 contenant l'acide forme un écran entre la membrane bipolaire et le gaz carbonique qui se forme dans la solution de carbonate de sodium en voie de décomposition. On évite de la sorte une détérioration de la membrane bipolaire.

Les exemples suivants servent à illustrer l'invention.

### Exemple 1 (de référence)

On a mis en oeuvre une cellule du type à deux compartiments, ceux-ci étant délimités entre une membrane cationique et deux membranes bipolaires situées respectivement de part et d'autre de la membrane cationique (les membranes bipolaires étant disposées dans la cellule de manière à avoir leur face cationique dirigée vers la cathode). La superficie de chacune des membranes bipolaires a été de 7 cm². Le compartiment défini entre la membrane cationique et la face anionique d'une des membranes bipolaires a été alimenté avec de l'eau déminéralisée et l'autre compartiment a été alimenté avec une solution aqueuse de carbonate de sodium (contenant approximativement de 100 à 120 g Na₂CO₃ par kg et de 10 à 30 g de NaHCO₃ par kg). On a maintenu dans la cellule une température sensiblement uniforme de 50 °C et on a réalisé l'électrodialyse sous une densité de courant de 1,5 kA par m² de superficie de chaque membrane bipolaire. On a mesuré, au cours du temps, la différence de potentiel entre les deux faces de chacune des membranes bipolaires au moyen de capillaires de Luggin. Les résultats des mesures sont consignés dans le tableau ci-dessous, les deux membranes bipolaires y étant désignées respectivement "Membrane 1" et "Membrane 2".

| Jours | Potentiel (V) | |
|---|---|---|
| | Membrane 1 | Membrane 2 |
| 1 | 1,69 | 1,35 |
| 21 | 1,87 | 1,70 |
| 58 | 3,03 | 2,36 |
| 97 | 5,43 | 2,60 |

### Exemple 2 (conforme à l'invention)

Dans cet exemple, on a mis en oeuvre, conformément à l'invention, une cellule du type à trois compartiments, ceux-ci étant délimités entre une membrane bipolaire et deux membranes cationiques situées respectivement de part et d'autre de la membrane cationique (la membrane bipolaire étant disposée dans la cellule de manière à avoir sa face cationique dirigée vers la cathode). La superficie de la membrane bipolaire a été de 7 cm². Le compartiment comprenant la face anionique de la membrane bipolaire a été alimenté avec de l'eau déminéralisée, le compartiment comprenant la face cationique de la membrane bipolaire a été alimenté avec une solution aqueuse d'acide chlorhydrique (4 % en poids) et le troisième compartiment a été alimenté avec une solution aqueuse de carbonate de sodium (contenant approximativement de 100 à 120 g Na₂CO₃ par kg et de 10 à 30 g de NaHCO₃ par kg). On a maintenu dans la cellule une température sensiblement uniforme de 50 °C et on a réalisé l'électrodialyse sous une densité de courant de 1,5 kA par m² de superficie de la membrane bipolaire. On a mesuré, comme à l'exemple 1, la différence de potentiel entre les deux faces de la membrane bipolaire, au moyen de capillaires de Luggin. Les résultats des mesures sont consignés dans le tableau ci-dessous.

| Jours | Potentiel (V) |
|---|---|
| 1 | 1,20 |
| 102 | 1,25 |

Une comparaison des résultats des exemples 1 et 2 fait immédiatement apparaître le progrès apporté par l'invention en ce qui concerne la tension dans les membranes bipolaires.

## Revendications

1. Procédé de fabrication d'hydroxyde de sodium par électrodialyse de carbonate de sodium, caractérisé en ce qu'on met en oeuvre une cellule (1) d'électrodialyse à trois compartiments (9,10,11), on introduit une solution aqueuse de carbonate de sodium (12) dans un compartiment (10) de la cellule, qui est délimité entre deux membranes cationiques (3,4), on introduit un acide (13) qui, dans les conditions normales de l'électrodialyse de carbonate de sodium, ne génère pas un gaz dans un compartiment (9) qui est délimité entre une des membranes cationiques (3) et une face cationique (8,8') d'une membrane bipolaire (2,2') et on extrait une solution aqueuse d'hydroxyde de sodium (15) d'un compartiment (11) qui est adjacent à une face anionique (7,7') de la membrane bipolaire (2,2').

2. Procédé selon la revendication 1, caractérisé en ce qu'on met en oeuvre un pH alcalin dans le compartiment (10) dans lequel on introduit la solution de carbonate de sodium.

3. Procédé selon la revendication 2, caractérisé en ce qu'on met en oeuvre un pH de 9 à 11 dans le compartiment (10) dans lequel on introduit la solution de carbonate de sodium et un pH de 0 à 0,5 dans le compartiment (9) dans lequel on introduit l'acide.

4. Procédé selon l'une quelconque des revendications 1 à 3, caractérisé en ce que la solution aqueuse de carbonate de sodium comprend du bicarbonate de sodium et est obtenue par dissolution de sesquicarbonate de sodium dans de l'eau.

5. Procédé selon la revendication 4, caractérisé en ce que la solution de carbonate de sodium est obtenue par dissolution de trona dans de l'eau.

6. Procédé selon l'une quelconque des revendications 1 à 5, caractérisé en ce qu'on met en oeuvre, pour l'acide, une solution aqueuse d'acide chlorhydrique.

7. Procédé selon l'un quelconque des revendications 1 à 5, caractérisé en ce que l'acide est sélectionné parmi les oxacides hydrosolubles.

8. Procédé selon la revendication 7, caractérisé en ce qu'on sélectionne un oxacide dont l'anion présente un diamètre ionique supérieur à 1,8 Å.

9. Procédé selon la revendication 8, caractérisé en ce qu'on sélectionne l'acide parmi l'acide sulfurique et l'acide nitrique.

10. Procédé selon l'une quelconque des revendications 1 à 9, caractérisé en ce qu'on met en oeuvre une membrane bipolaire (2,2') obtenue par juxtaposition d'une membrane anionique et d'une membrane cationique.

## Claims

1. Process for manufacturing sodium hydroxide by the electrodialysis of sodium carbonate, characterized in that an electrodialysis cell (1) having three compartments (9,10,11) is employed, an aqueous sodium carbonate solution (12) is introduced into a compartment (10) of the cell which is bounded between two cationic membranes (3,4), an acid which, under the normal conditions of the electrolysis of sodium carbonate, does not generate a gas is introduced into a compartment (9) which is bounded between one of the cationic membranes (3) and a cationic face (8,8') of a bipolar membrane (2,2'), and an aqueous sodium hydroxide solution (15) is removed from a compartment (11) which is adjacent to an anionic face (7,7') of the bipolar membrane (2,2').

2. Process according to Claim 1, characterized in that an alkaline pH is employed in the compartment (10) into which the sodium carbonate solution is introduced.

3. Process according to Claim 2, characterized in that a pH of from 9 to 11 is employed in the compartment (10) into which the sodium carbonate solution is introduced and a pH of from 0 to 0.5 is employed in the compartment (9) into which the acid is introduced.

4. Process according to any one of Claims 1 to 3, characterized in that the aqueous sodium carbonate solution contains sodium bicarbonate and is obtained by dissolving sodium sesquicarbonate in water.

5. Process according to Claim 4, characterized in that the sodium carbonate solution is obtained by dissolving trona in water.

6. Process according to any one of Claims 1 to 5, characterized in that an aqueous hydrochloric acid solution is used as the acid.

7. Process according to any one of Claims 1 to 5, characterized in that the acid is selected from water-soluble oxyacids.

8. Process according to Claim 7, characterized in that an oxyacid is selected in which the anion has an ion diameter greater than 1.8 Å.

9. Process according to Claim 8, characterized in that the acid is selected from sulphuric acid and nitric acid.

10. Process according to any one of Claims 1 to 9, characterized in that a bipolar membrane (2,2') obtained by juxtaposition of an anionic membrane and a cationic membrane is employed.

## Patentansprüche

1. Verfahren zur Herstellung von Natriumhydroxid durch Elektrodialyse von Natriumcarbonat, dadurch gekennzeichnet, daß man eine Elektrodialysezelle (1) mit drei Kammern (9, 10, 11) einsetzt, man eine wässrige Natriumcarbonatlösung (12) in eine Kammer (10) der Zelle, die zwischen zwei kationischen Membranen (3, 4) begrenzt ist, zuführt, man eine Säure (13), die unter den normalen Bedingungen der Natriumcarbonatelektrodialyse kein Gas erzeugt, in eine Kammer (9), die zwischen einer der kationischen Membranen (3) und einer kationischen Seite (8, 8') einer bipolaren Membran (2, 2') begrenzt ist, zuführt und man eine wässrige Natriumhydroxidlösung (15) aus einer Kammer (11), die an eine anionische Seite (7, 7') der bipolaren Membran (2, 2') angrenzt, entnimmt.

2. Verfahren gemäß Anspruch 1, dadurch gekennzeichnet, daß man in der Kammer (10), in die man die Natriumcarbonatlösung zuführt, einen alkalischen pH verwendet.

3. Verfahren gemäß Anspruch 2, dadurch gekennzeichnet, daß man in der Kammer (10), in die man die Natriumcarbonatlösung zuführt, einen pH von 9 bis 11, und in der Kammer (9), in die man die Säure zuführt, einen pH von 0 bis 0,5 verwendet.

4. Verfahren gemäß einem der Ansprüche 1 bis 3, dadurch gekennzeichnet daß die wässrige Natriumcarbonatlösung Natriumbicarbonat umfasst und durch Auflösen von Natriumsesquicarbonat in Wasser erhalten wird.

5. Verfahren gemäß Anspruch 4, dadurch gekennzeichnet, daß die Natriumcarbonatlösung durch Auflösen von Trona in Wasser erhalten wird.

6. Verfahren gemäß einem der Ansprüche 1 bis 5, dadurch gekennzeichnet daß man als Säure eine wässrige Lösung von Chlorwasserstoffsäure verwendet.

7. Verfahren gemäß einem der Ansprüche 1 bis 5, dadurch gekennzeichnet daß die Säure unter den wasserlöslichen Oxosäuren ausgewählt ist.

8. Verfahren gemäß Anspruch 7, dadurch gekennzeichnet, daß man eine Oxosäure auswählt, deren Anion einen Ionendurchmesser von größer 1,8 Å aufweist.

9. Verfahren gemäß Anspruch 8, dadurch gekennzeichnet, daß man die Säure unter der Schwefelsäure und der Salpetersäure auswählt.

10. Verfahren gemäß einem der Ansprüche 1 bis 9, dadurch gekennzeichnet, daß man eine bipolare Membran (2, 2') einsetzt, die durch Juxtaposition einer anionischen Membran und einer kationischen Membran erhalten wurde.
